# EUROPEAN PATENT APPLICATION

(11) **EP 2 051 461 A1**
(43) Date of publication of application: **22.04.2009**
(21) Application number: 07291256.1
(22) Date of filing: 15.10.2007
(51) Int. Cl.: H04L 12/66, H04L 29/06

(54) **Multiservice gateway**

(71) Applicant: Alcatel Lucent, 75008 Paris (FR)
(72) Inventor: Butto, Fabio c/o Alcatel Lucent, 75008 Paris (FR); Finizola e Silva, Leonardo c/o Alcatel Lucent, 75008 Paris (FR); Van Tilburg, Rudi c/o Alcatel Lucent, 75008 Paris (FR)
(74) Representative: Louiset, Raphael

(57) **Abstract**

Multiservice gateway (**8**) comprising:
- a primary interface (**11**) for connection to a circuit-switched equipment (**2, 4**), such as 2G mobile handsets, PSTN and ISDN terminals,
- a plurality of secondary interfaces (**12**) for connection to one or more generic communication network(s) (**6, 7**),
- a plurality of protocol converters (**13**) each connected to a secondary interface (**12**) and configured to convert the signal from a circuit-switched protocol to a predetermined generic protocol, selected among a plurality of generic protocols including at least one peer-to-peer protocol, and vice-versa,
- a dispatcher module (**14**) configured to select a suitable protocol according to a predetermined selection rule associated with the circuit-switched equipment (**2, 4**).

## Description

### FIELD OF THE INVENTION

The invention relates to protocol conversion, and more specifically to gateways.

### BACKGROUND OF THE INVENTION

Communication technologies have undergone many evolutions during the past few decades - and so did communication equipments and networks.

Before the sixties, the PSTN (*Public Switched Telephony Network*) worked in an entirely analog mode, wherein speech modulations were simply conveyed from end to end under the form of continuously variable current modulations. In the sixties however PSTN began to work in a digital protocol, whereby speech was digitized and transmitted with TDM (*time-division multiplexing*) at a rate of 64 Kbps (*Kilobits per second*)*,* which is now considered as a low narrowband, with respect of broadband provided by modern DSL (*Digital Subscriber lines*) allowing rates over 1 Mbps (Megabits per second).

Many algorithms for converting analog speech to digital form were developed for PSTN, however the most common were those defined by the ITU (*International Telecommunication Union*) standard called G.711, i.e. semi-log A-law and mu- or µ-law. G.711 format has been exploited for digitizing voice by the telephone companies since the late 1960s / early 1970s. PSTNs are now almost entirely digital and include not only fixed telephones but also mobile ones. PSTN is sometimes referred to as the POTS (*Plain Old Telephone Service*).

Some other solutions were developed to integrate narrowband digital networks, such as ISDN *(Integrated Services Digital Network)* which is a circuit-switched telephone network system developed in the late 1980s and allows digital transmission of speech and data over ordinary telephone wires. ISDN also refers to a set of protocols for establishing and breaking circuit switched connections. Several standards were developed in addition to ISDN, e.g. the Basic Rate Interface (BRI) configuration, produced by the ITU - mainly for residential service - and which defines two 64 Kbps bearer speech channels and one 16 Kbps data channel.

In addition to the above, the mobile industry was developed using the same circuit switch approach but using radio links for the access segment. This network was called PLMN (*Public Land Mobile Network*)*.*

Recent developments in packet-switched networks made it possible to route speech over broadband IP networks, giving life to Voice over IP (VoIP) solutions. In VoIP, speech is digitized and compressed by means of suitable codecs to be encapsulated in data packet streams conveyed over an IP network.

VoIP ordinarily works in a signaling-wise client-server mode, wherein centralized servers control the set up from a client or another server, towards another server or client until the terminating client is reached. Once the call has been set up by the aforementioned servers, the voice data packets are transferred in peer-to-peer between the client end points.

Recent developments (in the late 1990s and early 2000s) lead to peer-to-peer (P2P) VoIP solutions such as Skype®, wherein the signaling and data are conveyed between clients or "nodes" without being centralized and routed by servers. P2P solutions are quite successful since the control of the network is spread over the end points avoiding the need of heavy centralized servers to control the service. International application No. W02005/009019 (SKYPER) discloses a peer-to-peer telephone system.

In view of the recent packet-switched networks, circuit-switched networks such as PLMN, PSTN and ISDN BRI are now referred to as "legacy networks", which means that the corresponding solutions are deemed to disappear in the future.

It is important to understand that each new technology does not replace the former ones, but is simply added thereto. For this reason, protocol converters, also known as gateways, must be implemented at the border of different networks in order to translate the disparate protocols, such as PSTN/PLMN protocols and VoIP protocols. Those gateways only allow conversations to protocols that require the presence of heavy servers in the network, the so called Controllers: Softswitches, IMS, etc. On the other hand, current available mechanisms allow legacy equipments - always served by a centralized architecture (e.g. IMS) - to communicate with a P2P network via a Gateway that interconnects two completely different networks (e.g. Skypeln®) or vice-versa (e.g. SkypeOut®).

However, this mechanism doesn't allow a network-based solution where legacy equipment is directly served by a P2P network. As such the known solutions are not entirely satisfactory, since there is no possibility for the user of legacy equipment to fully exploit the more advanced networks.

### SUMMARY OF THE INVENTION

It is an object of the invention to provide a reliable and yet adaptable solution for interconnecting legacy equipments (e.g. 2G Mobile Handset, POTS phone) with any type of network.

The proposed invention therefore provides, according to one object, a multiService gateway comprising:
- a primary interface for connection to a circuit-switched equipment, such as 2G mobile handsets, PSTN and ISDN terminals,
- a plurality of secondary interfaces for connection to a generic communication networks,
- a plurality of protocol converters each connected to a secondary interface and configured to convert the signal from a circuit-switched protocol to a predetermined generic protocol (e.g. a peer-to-peer VoIP protocol), selected among a plurality of generic protocols including at least one peer-to-peer protocol, and vice-versa,
- a dispatcher module configured to select a suitable protocol according to a predetermined selection rule associated with the circuit-switched equipment.

According to a second object, the invention provides a communication network comprising a circuit-switched equipment, a generic network, and a multiService gateway as proposed hereinbefore, interfacing said circuit-switched equipment and said generic network.

According to a third object, the invention provides a method to be implemented in a gateway for transferring data from a circuit-switched equipment to a generic communication network, said method comprising the following operations:
- receiving data (possibly including a request for connection to a distant equipment of a generic network) from a circuit-switched equipment in a circuit-switched protocol through a primary interface,
- selecting a predetermined protocol among a plurality of generic protocols including at least one peer-to-peer-like protocol, according to a predetermined selection rule associated with the circuit-switched equipment,
- converting data from the circuit-switched protocol to the selected protocol,
- sending the converted data to a generic communication network through a secondary interface.
   The selection rule may include sensing presence of a trigger signal embedded in the data received from the circuit-switched equipment, which trigger may consist of a predetermined sequence in a string of characters dialed on the circuit-switched equipment.
   According to a fourth object, the invention provides a computer program product implemented on a computer processing unit, said program including code sections for performing the operations of the method disclosed hereabove. According to a fifth object, the invention provides a computer processing unit implemented with such a computer program product.

### BRIEF DESCRIPTION OF THE DRAWINGS

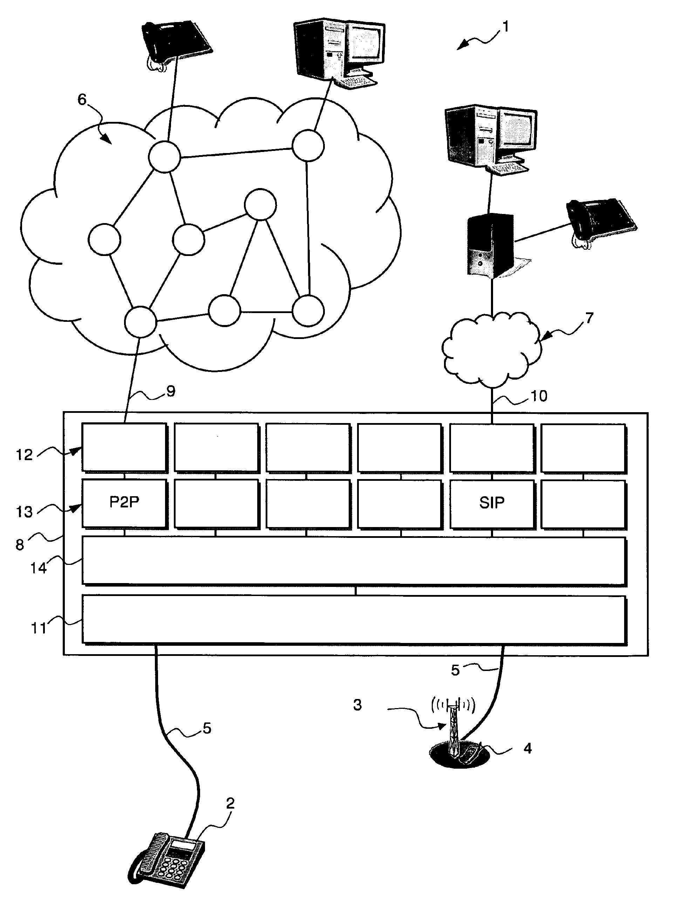

The above and other objects and advantages of the invention will become apparent from the detailed description of preferred embodiments, considered in conjunction with the accompanying drawing, which illustrates a network architecture according to the invention.

### DESCRIPTION OF PREFERRED EMBODIMENTS

A communication network architecture **1** is depicted on the accompanying drawing. The architecture **1** comprises a legacy circuit-switched equipments such as POTS telephones **2**, a Mobile Access Network (e.g. a 2G GSM edge radio access network - GERAN) **3** coupled to mobile user handsets **4.** The legacy equipment is connected to a circuit-switched line 5 that conveys the speech and/or data according to a circuit-switched analog or digitized narrowband protocol such as Circuit-switched PLMN (PLMN CS), PSTN or ISDN. The communication network architecture 1 also comprises one or more generic network(s), preferably packet-switched, such as a peer-to-peer or peer-to-peer-like IP network **6** configured for carrying speech for P2P VoIP applications, or a classic server-client IP network 7 suitable for carrying speech for ordinary server-client VoIP applications. We use the term "peer-to-peer-like" to encompass future possible evolutions of peer-to-peer networks wherein data may pass through client-server network portions (or wherein server-like nodes - called "supernodes" - may be present).

As depicted on the accompanying drawing, the communication network architecture 1 also comprises a MultiService Gateway (MSG) **8** interfacing the circuit-switched equipment **2, 3** (connected to the MSG **8** through the circuit-switched line **5**) and the generic network(s) **6, 7** (connected to the MSG **8** through a suitable - e.g. packet-switched - line **9, 10**).

The MSG **8** comprises a primary interface **11** for connection to the circuit-switched equipment **2, 3**, and a plurality of secondary interfaces **12** for connection to the generic networks 6, 7, which may be of any type including packet-switched (the drawing is referring to packet-switched networks **6, 7)**.

The MSG 8 also comprises a plurality of protocol converter **13** modules each connected to a secondary interface **12** and configured to convert the signal from the circuit-switched protocol used by the legacy equipment **2, 3** to a predetermined suitable protocol - e.g. packet-switched
- selected among a plurality of generic protocols (e.g. SIP IMS, P2P, etc).

The MSG 8 is configured to allow connection to and from a P2P network **6.** Accordingly, the MSG **8** comprises at least one protocol converter **13** configured to convert the signal from the circuit-switched protocol to a P2P protocol. The MSG **8** further comprises a dispatcher module **14** configured to select a suitable generic protocol according to one or more selection rules, such as: pre-provisioning, analysis of the dialed number (numeric or alphanumeric like Request URI - Uniform Resource Identifier), time of day or any other method, implemented in the dispatcher module **14** and associated with the circuit-switched equipment **2, 3**, in order for the circuit-switched equipment **2, 3** to be interfaced with the right network **6** or **7**.

In one preferred embodiment, the selection rule includes sensing presence of a trigger signal embedded in the data received from the circuit-switched equipment **2, 3**, such as a predetermined sequence in a string of characters dialed on the packet-switched equipment.

For example, in order to be connected to a P2P VoIP terminal such as a Skype® phone, the user of the circuit-switched equipment **2, 3** may have to dial a predetermined prefix before dialing the number of the VoIP terminal. In order to be connected to a ordinary VoIP phone, the user of the circuit-switched equipment **2, 3** may have to dial a different prefix.

For example, the prefix may be set to ## for Skype® service network whereas it may be set to ** for ordinary SIP (Session Initiation Protocol) VoIP Service network. The dispatcher module **14** only has to sense presence of the prefix and switch the communication to the corresponding protocol converter **13**.

The selection rule may also provide that, in case no prefix is sensed, the call be switched to a default protocol converter **13** (such as SIP VoIP).

Accordingly, a method for transferring data from the circuit-switched equipment **2, 3** to one generic network **6** or **7** is achieved through the following operations which, in practice, correspond to code sections of a computer program implemented on a computer processing unit of the MSG **8**.

First, data are received by the MSG **8** from the circuit-switched equipment **2, 3** (in the corresponding circuit-switched protocol such as PSTN, PLMN or ISDN) through the first interface **11**. The data may include or consist of a request for connection to a distant equipment included in the network **6** or **7**.

According to the selection rule, the MSG **8** analyzes the data received from the circuit-switched equipment **2, 3** to sense presence of a trigger signal.

In case the trigger signal is sensed, a suitable packet-switched protocol is selected among the plurality of implemented packet-switched protocols.

The data from the circuit-switched protocol are the converted by the suitable protocol converter to the selected packet-switched protocol, and delivered to the packet-switched network **6** or **7** through the corresponding secondary interface **12**.

One main advantage of the Multiservice Gateway and method disclosed hereinbefore is that a legacy equipment may be interfaced with a plurality of generic (e.g. packet-switched) networks, including but not restricted to P2P networks and in particular P2P VoIP networks (the legacy equipment thus becoming a virtual node within the P2P network), without necessity of modifying the installation at the user's premises. Accordingly, the legacy equipment may contact - or be contacted by - terminals in the corresponding packet-switched networks.

## Claims

1. Multiservice gateway **(8)** comprising:
- a primary interface (11) for connection to a circuit-switched equipment **(2, 4),** such as 2G mobile handsets, PSTN and ISDN terminals,
- a plurality of secondary interfaces **(12)** for connection to one or more generic communication network(s) **(6, 7),**
- a plurality of protocol converters **(13)** each connected to a secondary interface **(12)** and configured to convert the signal from a circuit-switched protocol to a predetermined generic protocol, selected among a plurality of generic protocols including at least one peer-to-peer protocol, and vice-versa,
- a dispatcher module **(14)** configured to select a suitable protocol according to a predetermined selection rule associated with the circuit-switched equipment **(2, 4).**

2. Multiservice gateway **(8)** according to claim 1, wherein the packet-switched protocols include at least one peer-to-peer VoIP protocol.

3. Communication network **(1)** comprising a circuit-switched equipment **(2, 4),** a generic network, and a Multiservice gateway **(8)** according to claim 1 or 2, interfacing said circuit-switched equipment **(2, 4)** and said generic network **(6, 7)**.

4. Method to be implemented in a gateway **(8)** for transferring data from a circuit-switched equipment **(2, 4)** to a generic communication network **(6, 7),** said method comprising the following operations:
- receiving data from a circuit-switched equipment **(2, 4)** in a circuit-switched protocol through a primary interface **(11),**
- selecting a predetermined protocol among a plurality of generic protocols including at least one peer-to-peer-like protocol, according to a predetermined selection rule associated with the circuit-switched equipment **(2, 4)**,
- converting data from the circuit-switched protocol to the selected protocol,
- sending the converted data to a generic communication network **(6, 7)** through a secondary interface **(12)**.

5. Method according to claim 4, wherein said data include a request for connection to a distant equipment of a generic network **(6, 7).**

6. Method according to claim 4 or 5, wherein the selection rule includes sensing presence of a trigger signal embedded in the data received from the circuit-switched equipment **(2, 4)**.

7. Method according to claim 6, wherein said trigger consists of a predetermined sequence in a string of characters dialed on the circuit-switched equipment **(2, 4)**.

8. Computer program product implemented on a computer processing unit, said program including code sections for performing the operations of a method according to any of claims 4-7.

9. Computer processing unit implemented with a computer program product according to claim 8.
